# EUROPEAN PATENT APPLICATION

(11) **EP 4 768 756 A1**
(43) Date of publication of application: **01.07.2026**
(21) Application number: 25226391.8
(22) Date of filing: 22.12.2025
(51) Int. Cl.: F16H 61/14

(54) **METHOD AND DEVICE FOR CONTROLLING LOCK-UP CLUTCH, HYBRID ELECTRIC VEHICLE, AND MEDIUM**

(30) Priority: 31.12.2024 CN 202411993399
(71) Applicant: Hycet Transmission System (Jiangsu) Co., Ltd., Zhenjiang, Jiangsu 212200 (CN)
(72) Inventor: PENG, Chaowei, Zhenjiang, 212200 (CN); XIE, Lichen, Zhenjiang, 212200 (CN)
(74) Representative: Murgitroyd & Company

(57) **Abstract**

The present application provides a method and a device for controlling a lock-up clutch, a hybrid electric vehicle, and a medium. The method is applied to the field of vehicle control technologies and the method includes: acquiring a target lock-up pressure of the lock-up clutch at a moment of zero-torque crossing; controlling an actual lock-up pressure of the lock-up clutch to reduce to the target lock-up pressure before the zero-torque crossing; and maintaining the lock-up clutch at the target lock-up pressure until an engine passes through the zero-torque crossing. By finely adjusting a pressure of a lock-up clutch, the method solves issues such as power hysteresis, impact, and vibration during zero-torque crossing of an engine present in related technologies.

## Description

### TECHNICAL FIELD

The present application relates to the field of vehicle control technologies, and in particular, to a method and a device for controlling a lock-up clutch, a hybrid electric vehicle, and a medium.

### BACKGROUND

With the continuous development of the automotive market and the improvement of consumers' living standards, consumers' demands for driving experience have become increasingly stringent. Beyond expecting vehicles to possess excellent dynamic performance for rapid and smooth acceleration and driving under various operating conditions, consumers also hold higher standards for driving comfort. This includes smoothness of a vehicle during driving, seamless of gear shifts, control of noise and vibration within the vehicle, and the like.

To meet consumers' demands, related technologies impose limitations on an output torque gradient under operating conditions such as zero-torque crossing, aiming to reduce impact and jerkiness of the vehicle by optimizing a power transmission process, thereby improving driving comfort. However, the limitations on the output torque gradient easily lead to power hysteresis during the zero-torque crossing of an engine, and also lead to issues such as a certain degree of impact and vibration.

### SUMMARY

The present application provides a method and a device for controlling a lock-up clutch, a hybrid electric vehicle, and a medium. The method can solve issues such as power hysteresis, impact, and vibration during zero-torque crossing of an engine in related technologies, thereby ensuring both dynamic performance and smoothness during the zero-torque crossing of the engine, thus improving driving comfort and controllability.

In a first aspect, a method for controlling a lock-up clutch is provided. The method includes: acquiring a target lock-up pressure of the lock-up clutch at a moment of zero-torque crossing; controlling an actual lock-up pressure of the lock-up clutch to reduce to the target lock-up pressure before the zero-torque crossing; and maintaining the lock-up clutch at the target lock-up pressure until an engine passes through the zero-torque crossing.

Through the above technical solutions, in the embodiments of the present application, the actual lock-up pressure of the lock-up clutch may be reduced to the target lock-up pressure before the zero-torque crossing of the engine. A lock-up pressure is related to power transmission of the lock-up clutch, and the lower lock-up pressure, the less power is transmitted by the lock-up clutch. Therefore, the power transmitted by the lock-up clutch is reduced by reducing the lock-up pressure, thereby mitigating impact caused by the power transmission during the zero-torque crossing of the engine. The mitigation of the impact may directly reduce vibration during the zero-torque crossing of the engine, thereby enhancing smoothness during the zero-torque crossing of the engine. Furthermore, since less power is transmitted during the zero-torque crossing of the engine, limitations of an output torque gradient become unnecessary, thereby preserving dynamic performance during the zero-torque crossing of the engine, helping reduce drivers' discomfort during vehicle acceleration, and improving driving comfort.

In combination with the first aspect, in some possible implementations, the controlling the actual lock-up pressure of the lock-up clutch to reduce to the target lock-up pressure before the zero-torque crossing includes: acquiring a target reduction rate of a lock-up pressure; and reducing the actual lock-up pressure to the target lock-up pressure based on the target reduction rate before the zero-torque crossing.

Through the above technical solutions, in embodiments of the present application precise control over a pressure change process of the lock-up clutch is achieved by acquiring the target reduction rate of the lock-up pressure and reducing the actual lock-up pressure to the target lock-up pressure before the zero-torque crossing based on the target reduction rate. This enables accurate adjustments to a pressure of the lock-up clutch based on requirements of the zero-torque crossing, thereby avoiding randomness and uncertainty in pressure changes. Furthermore, by presetting and following the target reduction rate to gradually reduce the pressure of the lock-up clutch, sudden impact and vibration may be avoided during the zero-torque crossing of the engine, thereby ensuring smoothness of the power transmission and improving driving experience.

In combination with the first aspect and the above implementations, in some possible implementations, the method further includes: acquiring an engine torque during a process of power transfer of a hybrid electric vehicle, where the controlling the actual lock-up pressure of the lock-up clutch to reduce to the target lock-up pressure before the zero-torque crossing includes: if the engine torque during the process of the power transfer is greater than a first torque threshold, controlling the actual lock-up pressure of the lock-up clutch to reduce to the target lock-up pressure before the zero-torque crossing.

Through the above technical solutions, in embodiments of the present application, the engine torque during the process of the power transfer of the hybrid electric vehicle is first acquired before a pressure of the lock-up clutch is controlled to reduce, and the engine torque greater than the first torque threshold is used as a trigger condition to execute subsequent pressure reduction operations. This indicates that a pressure adjustment is performed only when the vehicle is in an operating condition where such adjustment is required, thereby avoiding unnecessary control actions and reducing issues such as jerkiness and impact that may arise from controlling the lock-up clutch too early or too late, thus improving response efficiency and reliability of a system. Meanwhile, when the engine torque is greater than the first torque threshold, it indicates that the vehicle is in a critical phase where the power transmission needs to be controlled. At this point, promptly reducing the actual lock-up pressure of the lock-up clutch to the target lock-up pressure may make a smoother transition of the engine torque during the zero-torque crossing, thereby reducing power delays caused by unreasonable torque transmission of the lock-up clutch.

In combination with the first aspect and the above implementations, in some possible implementations, before the acquiring the engine torque during the process of the power transfer of the hybrid electric vehicle, the method further includes: acquiring an engine torque and a driver demand torque at a moment of the power transfer of the hybrid electric vehicle; and controlling the lock-up clutch to reduce the actual lock-up pressure based on the engine torque and the driver demand torque at the moment of the power transfer, until an actual slip between an engine speed and a turbine speed reaches a target slip.

Through the above technical solutions, in embodiments of the present application, intervention on a pressure of the lock-up clutch is early achieved by acquiring the engine torque and the driver demand torque at the moment of the power transfer, and controlling the lock-up clutch to reduce the actual lock-up pressure based on the engine torque and the driver demand torque. When the power transfer is about to occur, the engine torque and the driver demand torque are key factors determining power demands of the vehicle and an operating state of a power system. By adjusting the lock-up pressure in advance based on these factors, the lock-up clutch is enabled to operate in a more suitable state during the process of the power transfer, thereby optimizing a power transmission path and avoiding sluggish power transmission or impact that may result from the improper lock-up pressure at the moment of the power transfer, thus improving a response speed and response efficiency of a power system. Additionally, by adjusting the lock-up pressure promptly at the moment of the power transfer based on the engine torque and the driver demand torque, the engine torque can be transmitted to wheels more responsively and accurately, thereby avoiding a power delay phenomenon caused by the improper pressure of the lock-up clutch. By precisely controlling the slip, impact caused by a mismatch between the engine and a turbine is reduced.

In combination with the first aspect and the above implementations, in some possible implementations, after the maintaining the lock-up clutch at the target lock-up pressure, the method further includes: if the engine torque during the process of the power transfer is greater than a second torque threshold, determining the engine passes through the zero-torque crossing, where the second torque threshold is greater than the first torque threshold.

Through the above technical solutions, in embodiments of the present application whether the engine passes through the zero-torque crossing is more accurately determined by setting the second torque threshold that is greater than the first torque threshold. This not only improves adaptability to different driving conditions but also improves reliability and accuracy of the vehicle, thereby avoiding misjudgment. Moreover, once the engine torque exceeds the second torque threshold, it may be determined that the engine has passed through the zero-torque crossing, thereby allowing a faster transition from a phase of the zero-torque crossing to a normal operating state, thus reducing unnecessary delays and improving a power response speed.

In combination with the first aspect and the above implementations, in some possible implementations, the process of the power transfer is a process in which the engine torque changes from negative to positive.

Through the above technical solutions, in embodiments of the present application, the process of the power transfer is the process in which the engine torque changes from negative to positive. By clarifying the process of the power transfer, each step can be adjusted more precisely and in a more targeted manner to achieve a smooth transition, thereby meeting requirements of drivers for both dynamic performance and comfort of the vehicle.

In combination with the first aspect and the above implementations, in some possible implementations, after the maintaining the lock-up clutch at the target lock-up pressure until the engine passes through the zero-torque crossing, the method further includes: acquiring a pressure compensation value of the lock-up clutch; and controlling the lock-up clutch to increase the actual lock-up pressure based on the pressure compensation value and an engine torque.

Through the above technical solutions, in embodiments of the present application, after the engine passes through the torque cross-zero, the engine enters a normal phase in which it transmits a positive torque. At this point, a proper lock-up pressure is required to ensure efficient power transmission to wheels. Through calculation and application of the pressure compensation value, the pressure of the lock-up clutch may be precisely adjusted according to an actual torque of the engine, thereby allowing the lock-up clutch to better transmit the engine torque, thus reducing power loss, and improving transmission efficiency of a power system. Meanwhile, dynamically adjusting the pressure compensation value of the lock-up clutch based on engine torque changes can ensure that an operating state of the lock-up clutch always matches an operating condition of the engine, thereby optimizing driving comfort. Furthermore, during a process of pressure compensation after the zero-torque crossing of the engine, if a pressure is increased improperly, it may cause excessive wear on the lock-up clutch or excessive impact load on components such as a transmission. By precisely calculating the pressure compensation value and controlling the lock-up clutch based on the engine torque, situations where a pressure of the lock-up clutch is too high or too low may be avoided, thereby reducing a risk of wear and damage between components.

In a second aspect, a device for controlling a lock-up clutch is provided. The device includes: an acquisition module, configured to acquire a target lock-up pressure of the lock-up clutch at a moment of zero-torque crossing; a control module, configured to control an actual lock-up pressure of the lock-up clutch to reduce to the target lock-up pressure before the zero-torque crossing; and a maintenance module, configured to maintain the lock-up clutch at the target lock-up pressure until an engine passes through the zero-torque crossing.

In a third aspect, a hybrid electric vehicle is provided, including: a memory, a processor, and a computer program stored on the memory and executable on the processor, where the processor is configured to execute the computer program to implement the method for controlling the lock-up clutch according to the first aspect or any possible implementation of the first aspect.

In a fourth aspect, a computer-readable storage medium is provided, a computer program is stored on the computer-readable storage medium, and when the computer program is executed, the method for controlling the lock-up clutch according to the first aspect or any possible implementation of the first aspect is implemented.

### BRIEF DESCRIPTION OF THE DRAWINGS

FIG. 1 is a schematic flowchart of a method for controlling a lock-up clutch provided by embodiments of the present application.
FIG. 2 is a flowchart of a method for controlling a lock-up clutch provided by embodiments of the present application.
FIG. 3 is an operating principal diagram of a pressure pre-control phase of a lock-up clutch provided by embodiments of the present application.
FIG. 4 is an operating principal diagram of a TP3 of a lock-up clutch provided by embodiments of the present application.
FIG. 5 is an operating principal diagram of a pressure recovery phase of a lock-up clutch provided by embodiments of the present application.
FIG. 6 is a schematic structural diagram of a device for controlling a lock-up clutch provided by embodiments of the present application.
FIG. 7 is a schematic structural diagram of a hybrid electric vehicle provided by embodiments of the present application.

### DETAILED DESCRIPTION OF THE EMBODIMENTS

The technical solutions in the present application will be described clearly and in detail below with reference to the accompanying drawings. In the description of the embodiments of the present application, unless otherwise specified, "/" indicates the meaning of or, for example, A/B may indicate A or B. The term "and/or" in the text is only a description of an association relationship of associated objects, indicating that three relationships may exist. For example, A and/or B may indicate: the existence of A alone, the simultaneous existence of A and B, or the existence of B alone. In addition, in the description of the embodiments of the present application, "a plurality of" refers to two or more than two.

Hereinafter, the terms "first" and "second" are only used for descriptive purposes and are not to be construed as implying or suggesting relative importance or implicitly indicating the quantity of the indicated technical features. Thus, features defined with "first" and "second" may explicitly or implicitly include one or more such features.

A powertrain architecture of a hybrid electric vehicle uses a P2 motor and an engine as power output sources. During coasting, both an engine torque and a P2 motor torque are negative torques. When an accelerator is pressed, an output torque changes from negative to positive. Or, when an engine speed crosses an input shaft speed from below a turbine speed to above the turbine speed, a Hybrid Control Unit (HCU) or a Vehicle Control Unit (VCU) limits an output torque gradient, and the engine is made to pass slowly through a zero-torque point within a certain torque range until a transition from the negative torque to the positive torque is completed, which occurs either when the engine torque is greater than a specified torque value or when the input shaft speed crosses the turbine speed. Consequently, acceleration of the vehicle is somewhat affected in terms of dynamic performance, thereby imparting a sense of deceleration to drivers.

When the vehicle is coasting or when the accelerator is pressed suddenly to activate Tip-in, the engine transitions from a fuel cut-off state to fuel resupply, its torque changes from negative to positive, and the input shaft speed crosses the turbine speed. During this process, a Transmission Control Unit (TCU) merely responds to a command state of a lock-up clutch from the HCU or the VCU. Due to complexity of an operating condition, the HCU or the VCU cannot precisely control influence on drivability during repeated zero-torque crossing events, thereby leading to drivability issues. For example, in an operating condition such as re-acceleration during coasting or re-acceleration after braking, when the output torque transitions from negative to positive and the input shaft speed crosses the turbine speed, a locked lock-up clutch may cause the drivability issues such as impact.

Before explaining a method for controlling a lock-up clutch provided in the embodiments of the present application, control signals involved in the embodiments of the present application will be described first.

The control signals in the embodiments of the present application include: an input speed, i.e., a speed at an input end of a transmission, which is an engine speed or a motor speed; an input shaft speed, i.e., a turbine speed; a target slip speed, i.e., a slip between the turbine speed and the engine speed; a state of a lock-up clutch, i.e., a main state of the lock-up clutch, such as a slip control state (also referred to as an SLIP State), a locked state, a pressure recovery phase (also referred to as a Transition Phase 1, TP1), and a minimum lock-up pressure control phase (also referred to as a Transition Phase 3, TP3); a throttle opening, i.e., an opening of an accelerator pedal; a torque gradient, i.e., a driver demand torque gradient; an input torque, i.e., an engine torque; and a pressure of a lock-up clutch, i.e., a minimum pressure value of the lock-up clutch.

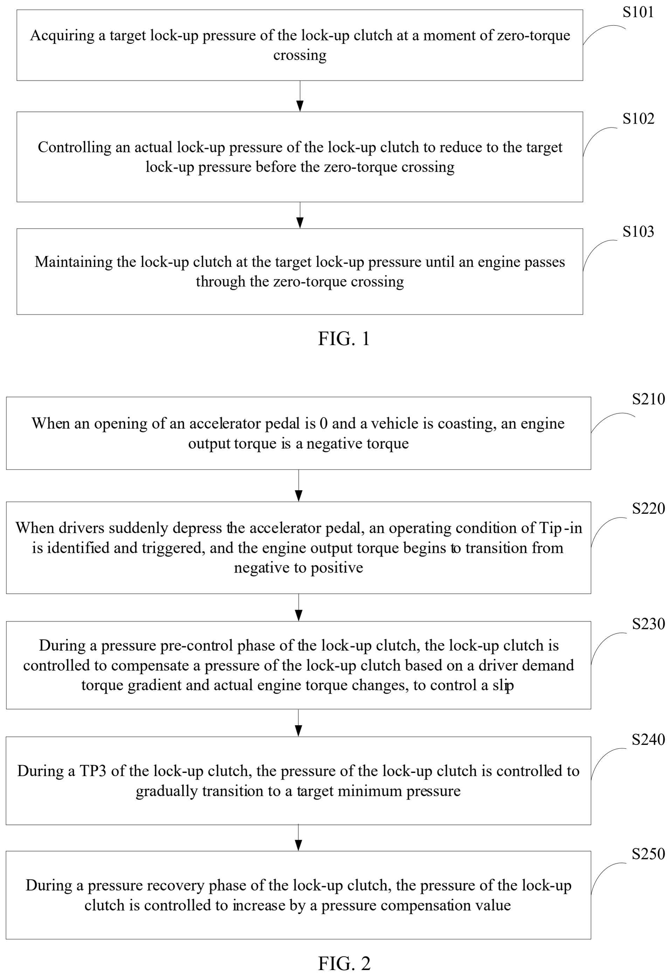

FIG. 1 is a schematic flowchart of a method for controlling a lock-up clutch provided in embodiments of the present application.

For example, as shown in FIG. 1, the method for controlling the lock-up clutch includes the following content.

In step S101, acquiring a target lock-up pressure of the lock-up clutch at a moment of zero-torque crossing.

The lock-up clutch is an important component in an automatic transmission, located between an engine and a transmission. Its main function is to directly connect the engine to the transmission under specific conditions, thereby reducing sliding loss within a torque converter and improving fuel economy and power transmission efficiency. The moment of the zero-torque crossing refers to an instant at which a torque value is exactly zero during a transition of the engine torque from negative to positive. The target lock-up pressure is an ideal pressure value that the lock-up clutch should reach at the moment of the zero-torque crossing. The target lock-up pressure may be obtained through calculation and calibration based on a series of factors, with a purpose of enabling the lock-up clutch to operate with a proper pressure at this critical moment of the zero-torque crossing, thereby achieving smooth power transfer and avoiding drivability issues such as impact and vibration.

It may be understandable that, in the embodiments of the present application a precise basis is provided for an entire control process by acquiring the target lock-up pressure of the lock-up clutch at the moment of the zero-torque crossing. This clarifies a control direction of a pressure of the lock-up clutch, thereby improving control accuracy and reliability of a power system. At the same time, this can optimize smoothness of a torque transition, thereby avoiding vibration or impact of a vehicle, thus making acceleration smoother and more natural, and improving driving experience. In addition, in the embodiments of the present application, a response speed of the power system under an operating condition of the zero-torque crossing may also be accelerated, power hysteresis is reduced, and acceleration demands are ensured.

In step S102, controlling an actual lock-up pressure of the lock-up clutch to reduce to the target lock-up pressure before the zero-torque crossing.

The actual lock-up pressure refers to an actual pressure value present in the lock-up clutch during an actual operation, which reflects an actual operating state of the lock-up clutch under different operating conditions.

It may be understandable that, in the embodiments of the present application, a pressure of the lock-up clutch is gradually reduced during a process where the engine torque transitions from negative to positive, thereby avoiding sudden impact and vibration. This gradual pressure adjustment ensures smoothness in power transmission and significantly improves driving smoothness.

In the embodiments of the present application, the controlling the actual lock-up pressure of the lock-up clutch to reduce to the target lock-up pressure before the zero-torque crossing includes: acquiring a target reduction rate of a lock-up pressure; and reducing the actual lock-up pressure to the target lock-up pressure based on the target reduction rate before the zero-torque crossing.

The target reduction rate refers to a rate of pressure reduction predetermined before the zero-torque crossing, enabling the actual lock-up pressure of the lock-up clutch to reduce to the target lock-up pressure smoothly and reasonably. The target reduction rate specifies the magnitude by which the lock-up pressure should reduce per unit of time and serves as a parameter for controlling a pressure change process of the lock-up clutch.

It may be understandable that, in the embodiments of the present application, precise control over the pressure change process of the lock-up clutch may be achieved by acquiring the target reduction rate of the lock-up pressure and reducing the actual lock-up pressure to the target lock-up pressure before the zero-torque crossing based on the target reduction rate. This enables accurate adjustments to a pressure of the lock-up clutch based on requirements of the zero-torque crossing, thereby avoiding randomness and uncertainty in pressure changes. Furthermore, by presetting and following the target reduction rate to gradually reduce the pressure of the lock-up clutch, sudden impact and vibration may be avoided during the zero-torque crossing of the engine, thereby ensuring smoothness of the power transmission and improving driving experience.

In the embodiments of the present application, before the controlling the actual lock-up pressure of the lock-up clutch to reduce to the target lock-up pressure before the zero-torque crossing, the method also includes: acquiring an engine torque during a process of power transfer of a hybrid electric vehicle; and controlling the actual lock-up pressure of the lock-up clutch to reduce to the target lock-up pressure before the zero-torque crossing if the engine torque is greater than a first torque threshold.

The engine torque is a key basis for judging the timing and strategy of pressure control of the lock-up clutch during the process of the power transfer of the vehicle. Its magnitude and trend directly affect an operating state and pressure adjustment requirements of the lock-up clutch. By acquiring the engine torque in real time, a control system can accurately understand a current power demand of the vehicle and an operating state of the engine, thereby adjusting the actual lock-up pressure of the lock-up clutch based on a pre-set control strategy to achieve smooth power transfer and good driving performance. The first torque threshold is a trigger condition for controlling a pressure adjustment of the lock-up clutch. When it is detected that the engine torque is greater than the first torque threshold, the control system initiates a series of operations, including controlling the actual lock-up pressure of the lock-up clutch to reduce to the target lock-up pressure before the zero-torque crossing. By setting the first torque threshold, pressure control of the lock-up clutch can be more precise and responsive. An effective pressure adjustment is performed only when actually required by operating conditions of the vehicle, thereby avoiding unnecessary control actions. This improves response efficiency and control accuracy of the system, and also contributes to protecting components of the power system, thereby extending their service life, thus enhancing overall reliability and stability of the hybrid electric vehicle.

It may be understandable that, in the embodiments of the present application, the engine torque during the process of the power transfer of the hybrid electric vehicle is first acquired before a pressure of the lock-up clutch is controlled to reduce, and the engine torque greater than the first torque threshold is used as a trigger condition to execute subsequent pressure reduction operations. This indicates that a pressure adjustment is performed only when the vehicle is in an operating condition where such adjustment is required, thereby avoiding unnecessary control actions and reducing issues such as jerkiness and impact that may arise from controlling the lock-up clutch too early or too late, thus improving response efficiency and reliability of a system. Meanwhile, when the engine torque is greater than the first torque threshold, it indicates that the vehicle is in a critical phase where the power transmission needs to be controlled. At this point, promptly reducing the actual lock-up pressure of the lock-up clutch to the target lock-up pressure may make a smoother transition of the engine torque during the zero-torque crossing, thereby reducing power delays caused by unreasonable torque transmission of the lock-up clutch.

In the embodiments of the present application, before the acquiring the engine torque during the process of the power transfer of the hybrid electric vehicle, the method also includes: acquiring an engine torque and a driver demand torque at a moment of the power transfer of the hybrid electric vehicle; and controlling the lock-up clutch to reduce the actual lock-up pressure based on the engine torque and the driver demand torque, until an actual slip between an engine speed and a turbine speed reaches a target slip.

The driver demand torque refers to a torque output desired by drivers, as conveyed to the power system of the vehicle through an operation of the accelerator pedal. It reflects the subjective intention of the drivers regarding a driving state of the vehicle, such as acceleration, deceleration, or maintaining a speed. When the drivers depress the accelerator pedal, changes in throttle opening correspond to different driver demand torque values. A greater throttle opening generally indicates drivers' desire for greater torque to achieve faster acceleration or to overcome greater driving resistance. Conversely, releasing the accelerator pedal indicates a reduction in driver demand torque, possibly reflecting an intention to decelerate or to allow the vehicle to coast. The target slip refers to a predetermined desired difference between the engine speed and the turbine speed in the power system of the hybrid electric vehicle, and is used to precisely control an operating state of the lock-up clutch.

It may be understandable that, in the embodiments of the present application, achieve early intervention on a pressure of the lock-up clutch is early achieved by acquiring the engine torque and the driver demand torque at the moment of the power transfer, and controlling the lock-up clutch to reduce the actual lock-up pressure based on the engine torque and the driver demand torque. When the power transfer is about to occur, the engine torque and the driver demand torque are key factors determining power demands of the vehicle and an operating state of a power system. By adjusting the lock-up pressure in advance based on these factors, the lock-up clutch is enabled to operate in a more suitable state during the process of the power transfer, thereby optimizing a power transmission path and avoiding sluggish power transmission or impact that may result from the improper lock-up pressure at the moment of the power transfer, thus improving a response speed and response efficiency of a power system. Additionally, by adjusting the lock-up pressure promptly at the moment of the power transfer based on the engine torque and the driver demand torque, the engine torque can be transmitted to wheels more responsively and accurately, thereby avoiding a power delay phenomenon caused by the improper pressure of the lock-up clutch. By precisely controlling the slip, impact caused by a mismatch between the engine and a turbine is reduced.

In the embodiments of the present application, the process of the power transfer is a process in which the engine torque changes from negative to positive.

It may be understandable that, in the embodiments of the present application, the process of the power transfer is the process in which the engine torque changes from negative to positive. By clarifying the process of the power transfer, each step can be adjusted more precisely and in a more targeted manner to achieve a smooth transition, thereby meeting requirements of drivers for both dynamic performance and comfort of the vehicle.

In step S103, maintaining the lock-up clutch at the target lock-up pressure until an engine passes through the zero-torque crossing.

It may be understandable that, in the embodiments of the present application, during the process of the zero-torque crossing of the engine, the lock-up clutch is maintained at the target lock-up pressure. This ensures a smooth transition of power transmission between the engine and the transmission. When the engine torque transitions from negative to positive, if a pressure of the lock-up clutch is unstable, fluctuations in the power transmission may occur, causing the vehicle to shudder. The target lock-up pressure is precisely calculated and calibrated. At this pressure, the lock-up clutch can connect the engine to the transmission in a suitable state, making increase and decrease of power more linear, thereby effectively avoiding impact and vibration caused by torque reversal, thus providing a more comfortable driving experience for drivers.

In the embodiments of the present application, after the maintaining the lock-up clutch at the target lock-up pressure, the method also includes: if the engine torque is greater than a second torque threshold, determining the engine passes through the zero-torque crossing, where the second torque threshold is greater than the first torque threshold.

The second torque threshold is a specific torque value used to clearly determine that the engine passes through the zero-torque crossing during the control process of the power transfer of the hybrid electric vehicle. It is predetermined, and is a fixed value greater than the first torque threshold, and its specific magnitude is determined comprehensively based on characteristics of a power system of the vehicle, engine performance, and extensive test and real-world operational data.

It may be understandable that, in the embodiments of the present application, a system may more accurately determine whether the engine passes through the zero-torque crossing by setting the second torque threshold that is greater than the first torque threshold. This not only improves adaptability of a control system to different driving conditions but also improves reliability and accuracy of the system, thereby avoiding misjudgment. Moreover, once the engine torque exceeds the second torque threshold, the system may determine that the engine has passed through the zero-torque crossing, thereby allowing the system to transition from a phase of the zero-torque crossing to a normal operating state more quickly, thus reducing unnecessary delays and improving a power response speed.

In the embodiments of the present application, after the maintaining the lock-up clutch at the target lock-up pressure until the engine passes through the zero-torque crossing, the method also includes: acquiring a pressure compensation value of the lock-up clutch; and controlling the lock-up clutch to increase the actual lock-up pressure based on the pressure compensation value and an engine torque.

The pressure compensation value is an additional or adjusted lock-up pressure value applied after the engine passes through the zero-torque crossing. Its purpose is to optimize an operating state of the lock-up clutch, enabling the lock-up clutch to better adapt to subsequent vehicle operation requirements. The pressure compensation value is a dynamic parameter calculated based on various factors, including a current operating condition of the vehicle, a magnitude of the engine torque, and overall performance requirements of a power system.

It may be understandable that, in the embodiments of the present application, after the engine passes through the torque cross-zero, the engine enters a normal phase in which it transmits a positive torque. At this point, a proper lock-up pressure is required to ensure efficient power transmission to wheels. Through calculation and application of the pressure compensation value, the pressure of the lock-up clutch may be precisely adjusted according to an actual engine torque, thereby allowing the lock-up clutch to better transmit the engine torque, thus reducing power loss, and improving transmission efficiency of a power system. Meanwhile, dynamically adjusting the pressure compensation value of the lock-up clutch based on engine torque changes can ensure that an operating state of the lock-up clutch always matches an operating condition of the engine, thereby optimizing driving comfort. Furthermore, during a process of pressure compensation after the zero-torque crossing of the engine, if a pressure is increased improperly, it may cause excessive wear on the lock-up clutch or excessive impact load on components such as a transmission. By precisely calculating the pressure compensation value and controlling the lock-up clutch based on the engine torque, situations where a pressure of the lock-up clutch is too high or too low may be avoided, thereby reducing a risk of wear and damage between components.

According to the method for controlling the lock-up clutch proposed in the embodiments of the present application, by acquiring the target lock-up pressure at the moment of the zero-torque crossing, a precise direction is provided for a control process, so that control accuracy and reliability of a power system are improved, thereby optimizing smoothness of a torque transition, thus avoiding jitter and impact, making acceleration smooth and natural, improving driving experience, increasing a response speed and reducing power hysteresis. During the transition of the engine torque from negative to positive, the pressure of the lock-up clutch is gradually reduced, thereby ensuring smooth power transmission, thus improving driving smoothness. Controlling pressure changes based on the target reduction rate achieves precise adjustments, avoiding randomness and ensuring smooth power transmission. Using the engine torque greater than the first torque threshold as a trigger condition for adjusting the pressure of the lock-up clutch prevents unnecessary control, improves response efficiency and reliability, makes the zero-torque crossing transition smoother, and reduces power delays. By proactively intervening in the lock-up pressure based on the engine torque and the driver demand torque at the moment of the power transfer, a power transmission path is optimized, a response speed and response efficiency are improved, power delays and impact are avoided, and a slip is precisely controlled. By clearly defining the process of the power transfer, targeted and precise adjustments can be made to achieve a smooth transition, thereby meeting requirements for both dynamic performance and comfort. During the zero-torque crossing of the engine, maintaining the target lock-up pressure ensures linear changes in power transmission, avoiding impact and jerkiness, and providing comfortable driving experience. Setting the second torque threshold accurately judges the completion of the zero-torque crossing, thereby improving adaptability, reliability, and accuracy of a system, reducing delays, and enhancing a power response speed. After the engine passes through the zero-torque crossing, the lock-up pressure is precisely adjusted based on the pressure compensation value, improving transmission efficiency, and ensuring that an operating state of the lock-up clutch matches an operating condition of the engine, thus optimizing comfort, and avoiding a risk of excessive wear and damage to components.

Below, the method for controlling the lock-up clutch will be explained through a specific embodiment. The flowchart of the method is shown in FIG. 2, with details provided as follows.

S210, When an opening of an accelerator pedal is 0 and a vehicle is coasting, an engine output torque is a negative torque.

S220, When drivers suddenly depress the accelerator pedal, an operating condition of Tip-in is identified and triggered, and the engine output torque begins to transition from negative to positive.

When a power state of a vehicle is characterized by the negative torque and a negative slip, a lock-up clutch is in a speed PID control state, and the drivers suddenly depress the accelerator pedal, the engine torque begins to transition from negative to positive.

S230, During a pressure pre-control phase of the lock-up clutch, the lock-up clutch is controlled to compensate a pressure of the lock-up clutch based on a driver demand torque gradient and actual engine torque changes, to control a slip.

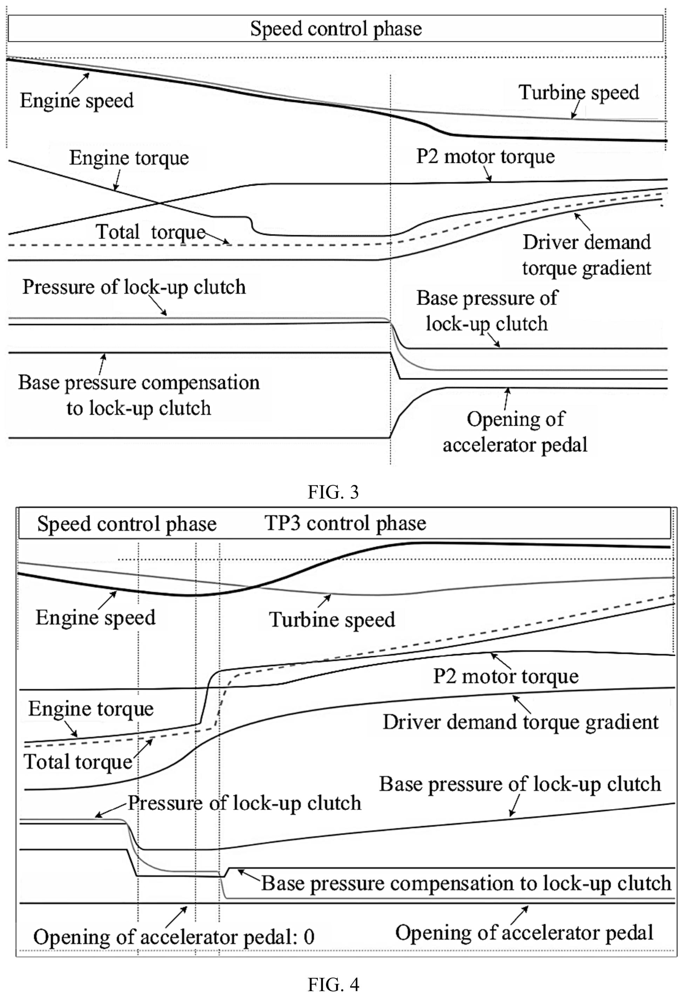

The pressure pre-control phase of the lock-up clutch is activated. During this phase, the pressure of the lock-up clutch is compensated based on the driver demand torque gradient and the actual engine torque changes. The pressure compensation value is calibrated to enable the slip build-up in the lock-up clutch. This prevents impact that would occur during a power transfer phase when torque crosses zero due to the absence of the slip in the lock-up clutch. An operating principal diagram of the pressure pre-control phase of the lock-up clutch is shown in FIG. 3.

S240: During a TP3 of the lock-up clutch, the pressure of the lock-up clutch is controlled to gradually transition to a target minimum pressure.

When drivers' Tip-in action is detected and the engine is in a non-intervention state, if the engine torque is greater than or equal to a specified torque value (for example, -30 Nm, which is a calibratable value) and a certain delay time (also calibratable) has elapsed, the lock-up clutch enters a TP3 control state.

In other words, when the engine torque increases to a preset torque value and the condition is confirmed over a period, the TP3 of the lock-up clutch is activated, and the pressure of the lock-up clutch is controlled to gradually transition to the target minimum pressure.

When the lock-up clutch is in the TP3, the engine power switches, with the torque transitioning from negative to positive, or an engine speed crossing an input shaft speed from below a turbine speed to above the turbine speed. During the zero-torque crossing, the pressure of the lock-up clutch transitions to the target pressure, the purpose of which is to ensure that the lock-up clutch transmits the minimum torque during the zero-torque crossing of the engine, thereby avoiding impact during a transition of the torque from negative to positive. An operating principal diagram of the TP3 of the lock-up clutch is shown in FIG. 4.

S250: During a pressure recovery phase of the lock-up clutch, the pressure of the lock-up clutch is controlled to increase by a pressure compensation value.

When the driver demand torque exceeds a preset value and the engine torque is greater than a certain value (for example, 45 Nm, which is a calibratable value), it is determined that the zero-torque crossing of the engine has ended. At this point, the control state of the lock-up clutch exits the TP3 and, after the filtering process of TP1, enters a speed PID control state. In other words, the lock-up clutch enters the pressure recovery phase. During the TP1, the pressure of the lock-up clutch transitions to the target pressure based on a filter coefficient.

After exiting the TP3 and transitioning through the TP1 to the speed PID control state, the engine torque has already become positive and drives the vehicle to provide positive acceleration. At this point, the pressure of the lock-up clutch increases from a base pressure to the target pressure. However, due to hysteresis of a hydraulic system of the lock-up clutch as the engine torque recovers, the pressure response of the lock-up clutch becomes slow, leading to slip friction. Therefore, when exiting the TP3, the pressure compensation value is added to the lock-up clutch to control a slip speed of the lock-up clutch.

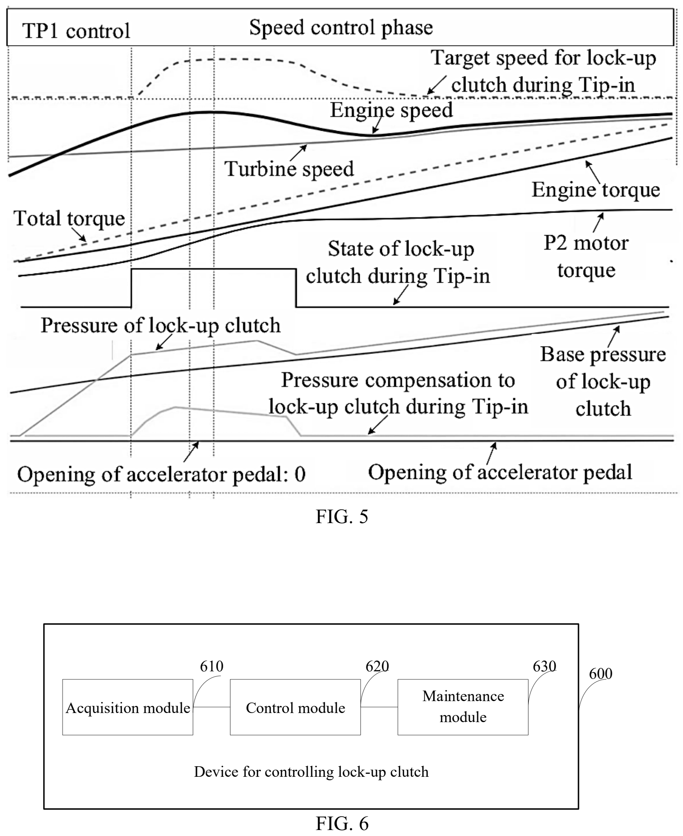

After entering the speed PID control state, the lock-up clutch engages in speed PI control. To prevent abrupt changes in the pressure of the lock-up clutch computed by the PI, a target slip is set for the operating condition of Tip-in, and closed-loop control is initiated accordingly. This design aims to avoid excessive slip values during the calculation of the lock-up pressure, thereby preventing synchronous impact caused by sudden changes in the lock-up pressure dragging the engine speed. An operating principal diagram of the pressure recovery phase of the lock-up clutch is shown in FIG. 5.

Upon activating the pressure recovery phase of the lock-up clutch, Tip-in compensation is added to the pressure of the lock-up clutch based on the state of the lock-up clutch. This design ensures rapid speed synchronization after the engine passes through the zero-torque crossing, while ensuring dynamic performance and driving smoothness.

The operating condition of Tip-in refers to an operating condition where the opening of the accelerator pedal suddenly increases but does not cause the transmission to downshift. A SPIDLE of the lock-up clutch refers to a slip proportional integral derivative control state of the lock-up clutch. The TP3 of the lock-up clutch indicates that the lock-up clutch is in an opening state with its pressure maintained at the minimum value. The TP1 of the lock-up clutch signifies that the pressure of the lock-up clutch is in a filtered transition state.

The specific implementation steps of the method are as follows.

During normal driving, if the drivers hold the accelerator pedal steady, the engine speed and the turbine speed remain within a stable slip speed range. When the drivers release or reduce pressure on the accelerator pedal, the driving state of the vehicle transitions from propulsion to drag, at which point the engine torque becomes the negative torque and the engine speed falls below the turbine speed. If the drivers then change intention to accelerate, the engine torque will transition from negative to positive, and the engine speed crosses the turbine speed to facilitate acceleration. At this point, to avoid drivability issues under these conditions, it is necessary to control the lock-up clutch to reduce a transmitted torque. This ensures that when the engine torque transitions from negative to positive, or when the engine speed crosses from below the turbine speed, impact and vibration caused by excessive torque on the lock-up clutch are eliminated. This operating condition is related to the driver demand torque gradient, the actual engine torque, and the throttle opening.

When the drivers suddenly accelerate during coasting, to avoid or adverse effects on acceleration performance that occur when the torque reverses or the engine speed crosses the turbine speed, the pressure of the lock-up clutch is controlled based on the current driver demand torque gradient and the actual engine torque changes once the drivers depress the accelerator pedal. This reduces the lock-up pressure of the lock-up clutch, establishing a controllable and stable slip (for example, 30 rpm, which is a calibratable value) between the engine speed and the turbine speed. Consequently, stable control of the system is ensured during engine torque reversal or when the input shaft speed crosses the turbine speed.

When the input torque recovers and exceeds a certain torque value (for example, -30 Nm which is a calibratable value), the lock-up clutch enters the TP3. At this point, the pressure of the lock-up clutch decreases to the minimum pressure value (calibratable) to ensure that the lock-up clutch remains at the minimal pressure when the input torque crosses through zero from negative. This reduces the torque transmitted by the lock-up clutch, thereby avoiding potential impact during the zero-torque crossing.

When the input torque crosses through zero and exceeds a certain torque value (for example, 45 Nm, which is a calibratable value), it is determined that the zero-torque crossing is completed, and the TP3 is exited. Subsequently, the lock-up clutch is controlled to recover its pressure and to follow the input torque, thereby completing the power transfer of the vehicle. When the engine torque becomes the positive torque, the pressure compensation of the lock-up clutch is increased to prevent excessive slip in the lock-up clutch due to inadequate pressure tracking of the lock-up clutch, thereby avoiding impact and vibration during lock-up.

In summary, regarding the enhancement of driving comfort, the method for controlling the lock-up clutch proposed in the embodiments of the present application effectively reduces impact and vibration caused by issues in the lock-up clutch during driving, optimizes acceleration smoothness, and provides a more stable and comfortable ride experience. In terms of improving reliability and efficiency of the power system, the method for controlling the lock-up clutch proposed in the embodiments of the present application protects components of the power system, reduces impact load, extends component life, and enhances power transmission efficiency, and reduces power loss. Regarding the enhancement of adaptability and a response speed of the system, the method for controlling the lock-up clutch proposed in the embodiments of the present application can accommodate various complex driving operating conditions, adjusts the pressure of the lock-up clutch in real time based on different factors, and also accelerates the response speed of the system, reduces power hysteresis, and improves handling and safety of the vehicle, thereby comprehensively improving performance of the power system of the vehicle.

FIG. 6 is a schematic structural diagram of a device for controlling a lock-up clutch provided by embodiments of the present application.

For example, as shown in FIG. 6, the device 600 may include: an acquisition module 610, a control module 620, and a maintenance module 630.

The acquisition module 610 is configured to acquire a target lock-up pressure of the lock-up clutch at a moment of zero-torque crossing; the control module 620 is configured to control an actual lock-up pressure of the lock-up clutch to reduce to the target lock-up pressure before the zero-torque crossing; and the maintenance module 630 is configured to maintain the lock-up clutch at the target lock-up pressure until an engine passes through the zero-torque crossing.

It should be noted that the explanation of the aforementioned embodiments of the method for controlling the lock-up clutch also applies to the device for controlling the lock-up clutch in this embodiment, and will not be repeated here.

In summary, in the device for controlling the lock-up clutch proposed in the embodiments of the present application, the acquisition module accurately acquires the target lock-up pressure at the moment of the zero-torque crossing, laying a precise foundation for control and improving control accuracy and reliability of a power system; the control module precisely reduces the actual lock-up pressure to the target value before the zero-torque crossing, achieving a gradual pressure adjustment, avoiding impact and vibration, ensuring smooth power transmission, and improving driving smoothness. The maintenance module stably maintains the target lock-up pressure during the zero-torque crossing, ensuring linear changes in the power transmission, preventing jerkiness, and optimizing driving experience. Furthermore, overall synergy of the device optimizes a response speed of the system, reduces power hysteresis, enhances reliability of the system, reduces a risk of component wear, extends service life, and improves adaptability of the system to different driving operating conditions and operating states. This enables the vehicle to maintain excellent performance and stability under various complex circumstances.

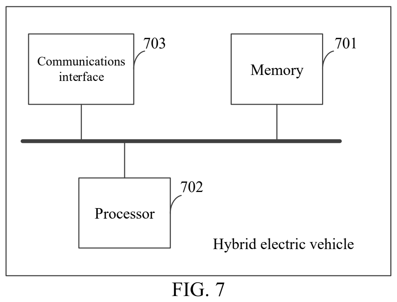

FIG. 7 is a schematic structural diagram of a hybrid electric vehicle provided by embodiments of the present application. The vehicle may include:
a memory 701, a processor 702, and a computer program stored on the memory 701 and executable on the processor 702.

When the processor 702 executes the computer program, the method for controlling the lock-up clutch provided in the above embodiments is implemented.

Further, the vehicle also includes:
a communications interface 703, configured to enable communication between the memory 701 and the processor 702.

The memory 701 is configured to store the computer program executable on the processor 702.

The memory 701 may include high-speed RAM, and may also include non-volatile memory, such as at least one disk memory.

If the memory 701, the processor 702, and the communications interface 703 are implemented independently, the communications interface 703, the memory 701, and the processor 702 may be connected via a bus to enable communication with one another. The bus may be an Industry Standard Architecture (ISA) bus, a Peripheral Component Interconnect (PCI) bus, an Extended Industry Standard Architecture (EISA) bus, and so on. The bus may be divided into an address bus, a data bus, a control bus, and so on. For ease of representation, FIG. 7 uses only a single thick line to represent the bus, which does not imply that there is only one bus or one type of bus.

Optionally, in specific implementations, if the memory 701, the processor 702, and the communications interface 703 are integrated on a single chip, the memory 701, the processor 702, and the communications interface 703 may communicate with one another via internal interfaces.

The processor 702 may be a Central Processing Unit (CPU), or an Application Specific Integrated Circuit (ASIC), or one or more integrated circuits configured to implement the embodiments of the present application.

The embodiments also provide a computer-readable storage medium, where a computer program code is stored on the computer-readable storage medium. When the computer program code is run on a computer, it causes the computer to execute the related steps in the method for controlling the lock-up clutch provided in the above embodiments.

In addition, the terms "first" and "second" are only used for descriptive purposes and should not be construed as indicating or implying relative importance or implicitly specifying the number of technical features indicated. Thus, features defined with "first" and "second" may explicitly or implicitly include at least one such feature. In the description of the present application, the term "a plurality of" means at least two, such as two, or three, unless explicitly specified otherwise.

In the description of this specification, references to terms such as "an embodiment," "some embodiments," "example," "specific example," or "some examples" mean that the specific features, structures, materials, or characteristics described in connection with the embodiment or example are included in at least one embodiment or example of the present application. In this specification, the schematic descriptions of the above terms do not necessarily refer to the same embodiment or example. Moreover, the specific features, structures, materials, or characteristics described may be combined in any one or more embodiments or examples in a suitable manner. In addition, without mutual contradiction, those skilled in the art may combine and integrate different embodiments or examples, and the features of different embodiments or examples described in this specification.

Although the embodiments of the present application have been shown and described above, it should be understood that the above embodiments are exemplary and should not be construed as limiting the present application. Those of ordinary skill in the art may make changes, modifications, replacements, and variations to the above embodiments within the scope of the present application.

## Claims

1. A method for controlling a lock-up clutch, comprising:
acquiring (S101) a target lock-up pressure of the lock-up clutch at a moment of zero-torque crossing;
controlling (S102) an actual lock-up pressure of the lock-up clutch to reduce to the target lock-up pressure before the zero-torque crossing; and
maintaining (S103) the lock-up clutch at the target lock-up pressure until an engine passes through the zero-torque crossing.

2. The method for controlling the lock-up clutch according to claim 1, wherein the controlling the actual lock-up pressure of the lock-up clutch to reduce to the target lock-up pressure before the zero-torque crossing comprises:
acquiring a target reduction rate of a lock-up pressure; and
reducing the actual lock-up pressure to the target lock-up pressure based on the target reduction rate before the zero-torque crossing.

3. The method for controlling the lock-up clutch according to claim 1 or claim 2, further comprising:
acquiring an engine torque during a process of power transfer of a hybrid electric vehicle,
wherein the controlling the actual lock-up pressure of the lock-up clutch to reduce to the target lock-up pressure before the zero-torque crossing comprises:
if the engine torque during the process of the power transfer is greater than a first torque threshold, controlling the actual lock-up pressure of the lock-up clutch to reduce to the target lock-up pressure before the zero-torque crossing.

4. The method for controlling the lock-up clutch according to claim 3, wherein before the acquiring the engine torque during the process of the power transfer of the hybrid electric vehicle, the method further comprises:
acquiring an engine torque and a driver demand torque at a moment of the power transfer of the hybrid electric vehicle; and
controlling the lock-up clutch to reduce the actual lock-up pressure based on the engine torque and the driver demand torque at the moment of the power transfer, until an actual slip between an engine speed and a turbine speed reaches a target slip.

5. The method for controlling the lock-up clutch according to claim 3, wherein after the maintaining the lock-up clutch at the target lock-up pressure, the method further comprises:
if the engine torque during the process of the power transfer is greater than a second torque threshold, determining the engine passes through the zero-torque crossing, wherein the second torque threshold is greater than the first torque threshold.

6. The method for controlling the lock-up clutch according to claim 3, wherein the process of the power transfer is a process in which the engine torque changes from negative to positive.

7. The method for controlling the lock-up clutch according to claim 1, wherein after the maintaining the lock-up clutch at the target lock-up pressure until the engine passes through the zero-torque crossing, the method further comprises:
acquiring a pressure compensation value of the lock-up clutch; and
controlling the lock-up clutch to increase the actual lock-up pressure based on the pressure compensation value and an engine torque.

8. A device for controlling a lock-up clutch (600), comprising:
an acquisition module (610), configured to acquire a target lock-up pressure of the lock-up clutch at a moment of zero-torque crossing;
a control module (620), configured to control an actual lock-up pressure of the lock-up clutch to reduce to the target lock-up pressure before the zero-torque crossing; and
a maintenance module (630), configured to maintain the lock-up clutch at the target lock-up pressure until an engine passes through the zero-torque crossing.

9. A hybrid electric vehicle, comprising a memory (701), a processor (702), and a computer program stored on the memory (701) and executable on the processor (702), wherein the processor (702) is configured to execute the computer program to implement the method for controlling the lock-up clutch according to any one of claims 1 to 7.

10. A computer-readable storage medium, wherein a computer program is stored on the computer-readable storage medium, and when the computer program is executed, the method for controlling the lock-up clutch according to any one of claims 1 to 7 is implemented.
